# EUROPÄISCHE PATENTSCHRIFT

(11) **EP 1 902 902 B1**
(45) Veröffentlichungstag und Bekanntmachung des Hinweises auf die Patenterteilung: **21.07.2010**
(21) Anmeldenummer: 07017644.1
(22) Anmeldetag: 10.09.2007
(51) Int. Cl.: B60R 11/02, H01Q 1/40

(54) **Abdeckelement**
Cover element
Elément de revêtement

(30) Priorität: 25.09.2006 DE 102006046436
(43) Veröffentlichungstag der Anmeldung: 26.03.2008
(73) Patentinhaber: Decoma (Germany) GmbH, 66280 Sulzbach (DE)
(72) Erfinder: Münker, Klaus, 72127 Jettenburg (DE)
(74) Vertreter: Lehmann, Judith Christina

(56) Entgegenhaltungen:
- DE-A1- 10 338 506
- DE-A1- 19 819 709
- DE-A1- 19 844 021
- DE-B3-102004 050 501
- DE-C1- 10 026 454

## Beschreibung

Die Erfindung betrifft ein Abdeckelement für eine Öffnung eines Fahrzeugs und ein Verfahren zum Herstellen eines Abdeckelements für eine Öffnung eines Fahrzeugs.

### Hintergrund der Erfindung

In einer Karosserie bzw. Außenwandung eines Fahrzeugs sind regelmäßig funktionelle Elemente, wie bspw. Sensoren und dergleichen, anzuordnen. Zum Schutz dieser funktionellen Elemente sowie aus ästhetischen Gründen kann des weiteren vorgesehen sein, derartige Öffnungen für die funktionellen Elemente mit geeigneten Abdeckelementen abzudecken oder zu verschließen.

Ein Verfahren zur Herstellung eines sog. Radoms für ein Abstandswarnradar ist in der Druckschrift DE 198 19 709 A1 beschrieben. Bei diesem Verfahren werden metallische Strukturen durch Beschichtung von Konturen dargestellt, ohne dabei Abbildungseigenschaften zu beeinflussen. Außerdem sind in dieses Radom Embleme oder charakteristische Strukturen integriert, über die zudem eine vollständige Transparenz für Radarstrahlen bereitgestellt ist.

Ein Kraftfahrzeug-Radarsystem ist in der Druckschrift DE 196 44 164 A1 offenbart. Hierzu befindet sich zum Schutz vor Witterungseinflüssen und vorzugsweise auch zur Fokussierung ein dielektrischer Körper in einem Strahlengang für elektromagnetische Wellen. Über diesen Körper ist es möglich Schmutz und Beläge aus Eis, Schnee oder Feuchtigkeit, die sich auf diesem dielektrischen Körper ablagern können, zu detektieren und ggf. zu beseitigen. Hierzu besitzt der dielektrische Körper eine Anordnung aus elektrisch leitfähigen Bahnen, womit dieser beheizt werden kann. Des weiteren kann eine Dämpfung eines möglichen Belags gemessen werden und es kann eine Zielsimulation zur Funktionsüberprüfung des Radarsystems durchgeführt werden.

In der Druckschrift DE 10 2004 050 501 B3 ist eine strahlungsdurchlässige Kunststoff-Abdeckung beschrieben. Diese ist für Öffnungen in Fahrzeug-Karosserien, insbesondere einem für elektromagnetische Strahlen wie Radarstrahlen durchlässigen Radom, das einen Körper aus durchsichtigem Kunststoff mit einer Außenfläche aufweist, vorgesehen. Durch die Außenfläche wird ein farblich kontrastierendes Muster einer Kühlerverkleidung oder eines Firmenemblems dargestellt. Dieses Firmenemblem ist auf einer der Außenfläche gegenüberliegenden Rückfläche des Körpers angebracht. Die Rückseite des durch Spritzen geformten transparenten Körpers ist flächig, insbesondere ganzflächig, jedoch unter Aussparung der für das Muster vorgesehenen Fläche mit einer Kunststoffmasse hinterspritzt. Außerdem ist ein Bereich des Musters nach dessen Anbringen eines Kunststoffkörpers durch Anspritzen eines Kunststoffmaterials mit dem von der Kunststoffmasse gebildeten Körper fest verbunden.

Eine weitere strahlungsdurchlässige Kunststoff-Abdeckung ist in der Druckschrift DE 1004 021 630 A1 offenbart. Diese Kunststoff-Abdeckung weist einen Kunststoffkörper mit einer Außenfläche auf und ist als Sonderausstattung mit mindestens einem Formteil, bspw. für eine Kühlerverkleidung oder einem Firmenzeichen, in einer Standardausführung zur Abdekkung einer Öffnung kombiniert. Außerdem ist vorgesehen, die Kunststoff-Abdeckung in eine optische Erscheinung einer Einbauumgebung einzufügen. Dabei wird das mindestens eine Formteil als körperlicher Bestandteil der Abdeckung vorgefertigt und mit einem die Außenfläche der Abdeckung bildenden Kunststoff durch Anspritzen von Kunststoffmaterial verbunden.

Die Druckschrift DE 100 26 454 Cl offenbart ein Radom für ein Abstands-Warn-Radar. Dabei ist vorgesehen, dass mit diesem Radom eine Bildung von Schnee oder einer Eisschicht verhindert wird. Dabei weisen dekorative, dünne Metallschichten des Radoms einen ohmschen Widerstand auf, so dass es möglich ist, mittels einer elektrischen Stromquelle des Radoms die Metallschichten zu beheizen.

### Zusammenfassung der Erfindung

Das erfindungsgemäße Abdeckelement ist für eine Öffnung eines Fahrzeugs vorgesehen und weist eine zumindest teilweise metallisierte Folie auf. Die Folie weist eine Sandwichstruktur mit einer oberen und einer unteren Deck- oder Schutzschicht, insbesondere Kunststoffschicht und/oder Lackschicht, und einer zwischen diesen beiden Deckschichten eingebetteten metallischen Schicht auf. Dabei ist vorgesehen, dass die Folie durch ihre Sandwichstruktur bzw. ihren Sandwichaufbau die metallische bzw. metallisierte Schicht schützt. Die Folie ist auf einer Vorderseite mit einer Schicht aus einem ersten Kunststoff überspritzt und auf eider Rückseite mit einer Abdeckschicht aus einem zweiten Kunststoff hinterspritzt.

Dieses Abdeckelement ist bspw. zum Abdecken einer in der Öffnung anzuordnenden Vorrichtung, die zum Abstandsmessen mittels elektromagnetischer Strahlen, insbesondere Radarstrahlen, ausgebildet ist, vorgesehen.

Außerdem ist das Abdeckelement regelmäßig als Emblem für das Fahrzeug ausgebildet. Als Kunststoff zu einem Bespritzen bzw. zum Über- und/oder Hinterspritzen der Folie kann Polycarbonat (PC) vorgesehen sein. Dadurch, dass insbesondere Polycarbonat als zu verwendender Kunststoff für die beiden Schichten, also der Schicht auf der Oberseite sowie der Abdeckschicht, und bspw. Polycarbonat für die Folie vorgesehen ist, wird ein guter Verbund zwischen den einzelnen Schichten und der Folie bereitgestellt. Dabei ist insbesondere der zum Überspritzen der Vorderseite der Folie vorgesehene erste Kunststoff zumindest teilweise optisch transparent, so dass ein Muster, das durch die metallisierte Folie dargestellt ist, nach außen hin sichtbar ist.

In der Regel sind die Schicht auf der Vorderseite der Folie, die Abdeckschicht auf der Rückseite der Folie sowie die beiden Kunststoffschichten der Folie zur Bereitstellung eines Verbunds aus demselben Kunststoff gebildet oder basieren materiell auf demselben Kunststoff. Durch die Einbettung der metallischen Schicht wird diese in den nachfolgenden Verfahrenschritten, speziell dem Spritzgiessen, vor Beschädigung geschützt. Wegen der hierfür notwendigen Temperaturstabilität kommen daher beispielsweise Polycarbonat und auf Polycarbonat basierende Kunststoffe zum Einsatz. Auch kann eine geeignete Lackierung der metallisierten Seite der Folie die Anforderung erfüllen, wenn gleichzeitig eine gute Haftung zur Abdeckschicht erzielt wird.

Dabei können die beiden Kunststoffschichten der Folie insbesondere aus Polycarbonat gebildet sein. Die dünne metalische Schicht zwischen den Kunststoffschichten ist aus Metall, bspw. Chrom. Die Folie des Abdeckelements kann bspw. aus Makrofol® DPF 5072 der Bayer AG, gebildet sein.

Dadurch, dass der auf die Folie über- und unterzuspritzende Kunststoff sowie die beiden Kunststoffschichten der Folie aus Polycarbonat gebildet sind oder zumindest materiell darauf basieren, wird insgesamt ein weitgehend homogenes und einstückiges Abdeckelement bereitgestellt.

Die metallische Schicht der Folie weist eine Dicke von wenigen Mikrometern, etwa in einer Größenordnung von 2 µm, auf. Die Dicke der metallischen Schicht ist so gewählt, dass sie für elektromagnetische Wellen transparent ist und gleichzeitig eine metallische Optik erzeugt.

Des weiteren kann vorgesehen sein, dass in der Abdeckschicht des Abdeckelements auf der Rückseite mindestens ein Befestigungselement integriert ist. Mit diesem mindestens einen Befestigungselement ist es möglich, das Abdeckelement an der Öffnung einer Karosserie oder Außenwandung anzuordnen bzw. zu befestigen. Dabei kann auch vorgesehen sein, dass das Abdeckelement als ein Einsatz in der Öffnung vorgesehen ist.

Bei dem erfindungsgemäßen Verfahren zum Herstellen eines Abdeckelements für eine Öffnung eines Fahrzeugs wird eine Vorderseite einer zumindest teilweise metallisierten Folie mit einem ersten Kunststoff unter Verbundbildung überspritzt und eine Rückseite dieser Folie mit einem zweiten Kunststoff unter Verbundbildung hinterspritzt.

Des weiteren kann die Folie vor einem Bespritzen, d.h. vor einem Überspritzen der Vorderseite und vor einem Hinterspritzen der Rückseite durch Auftragen einer geeigneten Farbe oder Druckfarbe, bspw. schwarzer Farbe, zumindest auf der Vorderseite der Folie mit einem Muster bedruckt werden. Zur Bereitstellung einer dreidimensionalen Struktur der Folie kann diese durch einen Tiefziehprozess oder durch ein Thermoumformen verformt werden.

Im Rahmen einer Herstellung des Abdeckelements kann die Folie als Rollenware bereitgestellt werden. Aus einer derartigen Rollenware können Folienstücke bereitgestellt werden, die für das Abdeckelement eine geeignete Größe aufweisen, und insbesondere durch Ausschneiden oder Ausstanzen hergestellt werden. Somit ist es möglich, auch vorgefertigte Dekorfolie als Rollenware zu verwenden und somit einen besonders günstigen Fertigungsprozess des Abdeckelements zu gewährleisten. Zudem kann auch vorgesehen sein, die Folie als metallisiertes Halbfertigteil bereitzustellen, wodurch ebenfalls Kosten für ein Herstellen des Abdeckelements reduziert werden können.

Außerdem ist regelmäßig vorgesehen, dass zumindest die Schicht für die Vorderseite der Folie zumindest mit dem ersten Kunststoff mittels einer In-Mould-Filmtechnik bespritzt wird. Die Rückseite der Folie wird des weiteren unter Bereitstellung einer aus dem zweiten Kunststoff gebildeten Abdeckschicht, die als Formteil ausgebildet ist, hinterspritzt. Zusätzlich kann auf dem Abdeckelement nach einem Bespritzen, d.h. Über- und Hinterspritzen, eine Hartbeschichtung aufgetragen werden. Eine insbesondere aus Siloxanlack gebildete Hartbeschichtung kann auf der Vorder- und/oder der Rückseite aufgetragen werden. Außerdem können in der Abdeckschicht für die Rückseite der Folie Befestigungselemente integriert werden.

Bei einer Variante zur Herstellung des Abdeckelements wird zwischen einzelnen Schichten, d.h. der Schicht aus dem ersten Kunststoff auf der Vorderseite und der Abdeckschicht aus dem zweiten Kunststoff und den entsprechenden Kunststoffschichten der Folie ein Verbund gebildet. Dies ist möglich, da sowohl die aufgespritzten Kunststoffschichten als auch die entsprechenden Kunststoffschichten der Folie aus demselben Kunststoff sind oder zumindest materiell auf demselben Kunststoff basieren. Durch einen derartigen Aufbau des Abdeckelements kann innerhalb des Abdeckelements eine Spaltbildung durch Temperaturwechsel vermieden werden kann. Der erste und der zweite Kunststoff sowie die Kunststoffschichten der Folie sind insbesondere aus Polycarbonat (PC).

Der erste und der zweite Kunststoff unterscheiden sich lediglich in ihrer Färbung voneinander, dabei ist der erste Kunststoff im optisch sichtbaren Bereich des elektromagnetischen Spektrums transparent und somit durchsichtig. Dem zweiten Kunststoff kann im Unterschied zu dem ersten Kunststoff ein opaquer, bspw. schwarzer, Farbstoff beigemischt sein, wobei die Farbe derart zu wählen ist, dass sich die beiden Kunststoffe bezüglich ihrer materiellen, in der Regel auch chemischen und/oder physikalischen Beschaffenheit bzw. Eigenschaften idealerweise nicht voneinander unterscheiden.

Durch den Materialverbund von Folie und Abdeckschichten wird eine Spaltbildung, wie sie bei ähnlichen aus dem Stand der Technik bekannten Abdeckelementen meist vorkommt, vermieden. Zudem wird eine von Teil zu Teil gleichbleibende, geringe Dämpfung der elektromagnetischen Strahlung erreicht. Durch Vermeiden der Spaltbildung ist des weiteren ein Evakuieren und Abdichten eines bei der Herstellung des Abdeckelements geformten Hohlraums nicht mehr erforderlich.

Mit der Erfindung kann somit ein Abdeckelement bzw. eine Abdeckung, die aus einem Verbund aus einem Kunststoff mit lediglich unterschiedlich gefärbten Schichten hergestellt ist, gebildet werden. Dieses Abdeckelement dient typischerweise als Einsatz oder Aufsatz für Öffnungen in Fahrzeugkarosserien und insbesondere in einem Kühlerschutzgitter, womit eine Vorrichtung zur Abstandsmessung mittels elektromagnetischer Strahlung, insbesondere ein Radarsensor, abzudecken ist. Durch die erfindungsgemäße Ausgestaltung des Abdeckelements ist gewährleistet, dass dieses zur Realisierung der Abstandsmessung für die elektromagnetische Strahlung hinreichend transparent und somit durchgängig ist.

Das Verfahren zur Herstellung des Abdeckelements bzw. Radoms ist in wenigen Fertigungsschritten durchführbar. Außerdem wird bei diesem Verfahren insgesamt ein Abdeckelement, dass als integrales Bauteil ohne Spaltbildung ausgebildet ist, bereitgestellt.

Zum Herstellen des einteiligen Abdeckelements aus Kunststoff, die durchlässig für elektromagnetische Strahlen ist, wird in der Regel die dekorative metallisierte Folie mit beidseitiger Oberfläche aus Kunststoff, bspw. Makrofol^{®} DPF 5072 der Bayer AG, bzw. mit einem ähnlichen Schutz der metallisierten Schicht, auf der Vorderseite mit einem transparenten ersten Kunststoff, insbesondere aus Polycarbonat, als Außenfläche überspritzt. Die Rückseite dieser Folie wird mit einer Abdeckschicht aus einem gefärbtem zweiten Kunststoff, insbesondere Polycarbonat, hinterspritzt.

Des weiteren kann die dekorative Folie auf der Oberseite mit einem Muster aus Farbe oder Farbstoff bzw. Druckfarbe, bspw. von der Firma Proell, bedruckt werden, wobei dieses Muster in der Folie innenliegend eine metallisierte Fläche der Folie zumindest teilweise abdeckt.

Durch Verformen der teilweise bedruckten Folie wird eine dreidimensionale Form und somit ein Profil oder Relief für die Folie erzeugt, die in einem weiteren Schritt in einer In-Mould-Filmtechnik mit dem transparenten ersten Kunststoff überspritzt wird. Dabei geht die Vorderseite der Folie mit einem dabei aus dem ersten Kunststoff gebildeten transparenten Formteil einen Verbund ein. Dabei schützt die Deckschicht aus Kunststoff oder Lack die metallisierte Schicht im Inneren der Folie. In einem zusätzlichen Schritt wird das im ersten Schritt erzeugte dekorative Profil der Folie auf der unbedruckten Rückseite mit einem Formteil aus dem zweiten Kunststoff hinterspritzt. Dabei geht die Rückseite der Folie mit einem dabei durch Hinterspritzen hergestellten zweiten Formteil einen Verbund ein. Während des Spritzgießvorgangs schützt die Deckschicht aus Kunststoff die metallisierte Schicht im Inneren der Folie. Anschließend kann auf das Abdeckelement eine Hartbeschichtung, bspw. in Form eines Siloxanlacks, aufgetragen werden.

Mit einem derartigen Abdeckelement ist es möglich, eine Radarantenne für das Fahrzeug zu schützen. Derartige Radarantennen und somit zum Abdecken vorgesehene Abdeckelemente sind bspw. in einem Stoßfänger oder in einem Kühlerschutzgitter angeordnet.

Das Abdeckelement weist in der Regel eine gleichmäßige Dikke auf. Zudem ist das Abdeckelement derart hergestellt und/oder ausgebildet, dass die Schicht aus dem ersten Kunststoff auf der Vorderseite des Abdeckelements besonders glatt und eben, also frei von Unebenheiten ist.

Eine für das Abdeckelement vorgesehene Folie weist eine Dicke von 200 bis 400 µm, insbesondere 375 µm, auf, wobei die zwischen den Kunststoffschichten eingebettete Metallschicht eine Dicke von ca. 2 µm aufweist und somit hinreichend dünn ist, um für elektromagnetische Wellen, die durch die Vorrichtung zum Abstandsmessen zu erfassen sind, durchlässig zu sein. Der Folie kann bspw. durch Thermoformen oder High Pressure Formen eine reliefartige Form gegeben werden. Außerdem kann auf dem Abdeckelement eine UVbeständige durchsichtige Schicht aus Harz auf einer Gegenseite der transparenten Schicht aufgetragen werden. Des weiteren können innerhalb des Abdeckelements eine Heizfolie aus Silber-Tinte oder entsprechende Heizspiralen oder Heizfäden aufgedruckt sein. Die Abdeckschicht auf der Rückseite ist regelmäßig schwarz, so dass die Heizfolie auf dieser Abdeckschicht aufgeklebt werden kann. Des weiteren ist vorgesehen, dass das Abdeckelement eine Dämpfung von weniger als 1,8 dB aufweist, so dass das Abdeckelement insbesondere für Radarstrahlen hinreichend durchgängig ist.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Kurzbeschreibung der Erfindung

- Figur 1: zeigt in schematischer Darstellung eine erste Ausführungsform eines erfindungsgemäßen Abdeckelements bei einer Ausführungsform eines Verfahrens zur Herstellung dieses Abdeckelements.
- Figur 2: zeigt das durch das in Figur 1 dargestellte Verfahren hergestellte erfindungsgemäße Abdeckelement in einer Vorderansicht sowie in einer Schnittansicht.
- Figur 3: zeigt in schematischer Darstellung eine Variante zur Formung eines erfindungsgemäßen Abdeckelements.

### Detaillierte Beschreibung der Erfindung

Die Erfindung ist anhand von Ausführungsbeispielen in der Zeichnung schematisch dargestellt und wird im folgenden unter Bezugnahme auf die Zeichnung ausführlich beschrieben.

Die Figuren werden zusammenhängend und übergreifend beschrieben, gleiche Bezugszeichen bezeichnen gleiche Bauteile.

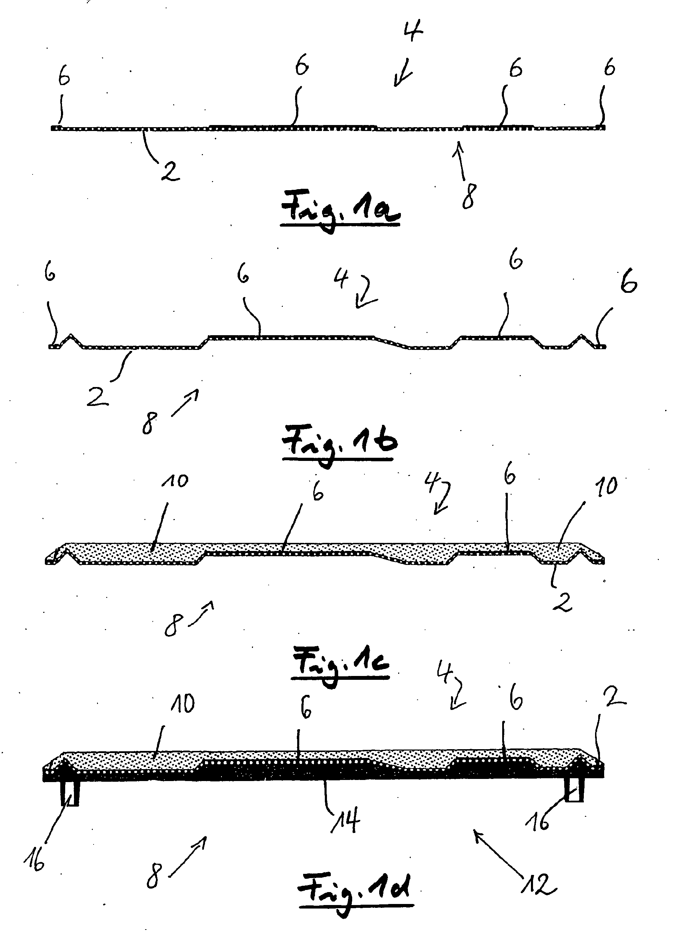

Die einzelnen Schritte zur Herstellung einer Ausführungsform des Abdeckelements nach einer Ausführungsform des Verfahrens sind in den Figuren 1a, 1b, 1c und 1d schematisch dargestellt.

Dabei zeigt Figur 1a eine metallisierte Folie 2, die aus zwei Kunststoffschichten gebildet ist, zwischen denen zumindest teilweise eine metallische Schicht eingebettet ist. Eine Vorderseite 4 dieser metallisierten Folie 2 wird bei der Herstellung stellenweise mit Farbe 6 bedruckt, so dass auf der Vorderseite 4 insgesamt ein Muster bereitgestellt ist.

Aufgrund dieser Bedruckung mit der hier schwarzen Farbe 6 ist die sichtbare Vorderseite 4 demnach zumindest teilweise farblich gestaltet. Eine Rückseite 8 der Folie 2 bleibt in dieser Ausführungsform unbedruckt.

Figur 1b zeigt die bereits in Figur 1a vorgestellte Anordnung, die die Folie 2 mit der aufgetragenen Farbe 6 umfasst, nach Durchführung eines Tiefziehprozesses. Durch diesen Tiefziehprozess wird die Folie 2 derart verformt, dass sie im dargestellten Querschnitt nunmehr ein Profil oder Relief aufweist. In der vorliegenden Ausführungsform wird dabei berücksichtigt, dass einzelne Bereiche, auf denen die Farbe 6 auf der Folie 2 aufgetragen ist, durch erhabene Profilabschnitte in inneren Bereichen der Folie 2 sowie durch abgesenkte Profilabschnitte an Randbereichen der Folie 2 von benachbarten Bereichen begrenzt sind.

Figur 1c zeigt die Anordnung nach einem Überspritzen der Vorderseite 4 der Folie 2 sowie der auf der Vorderseite 4 aufgetragenen Farbe 6 mit einer Schicht eines hier aus Polycarbonat gebildeten ersten transparenten Kunststoffs 10. Dieses Überspritzen wird derart durchgeführt, dass eine Oberfläche der Schicht aus dem ersten Kunststoff 10 besonders glatt und eben ist.

Figur 1d zeigt in einer schematischen Schnittdarstellung eine erste Ausführungsform eines erfindungsgemäßen Abdeckelements 12, wie es nach einem letzten Schritt zur Herstellung bereitgestellt ist. In diesem letzten Schritt wird die Rückseite 8 der Folie 2 unter Bereitstellung einer Abdeckschicht, die in vorliegender Ausführungsform aus einem aus schwarzem Polycarbonat gebildeten zweiten Kunststoff 14 gebildet wird, hinterspritzt. Dabei werden in dieser aus dem schwarzen zweiten Kunststoff 14 bereitgestellten Abdeckschicht auf der Rückseite 8 der Folie 2 zusätzlich Befestigungselemente 16 integriert. In weiterer Ausgestaltung kann auf der Schicht aus dem ersten Kunststoff 10 ein Siloxanlack aufgetragen werden.

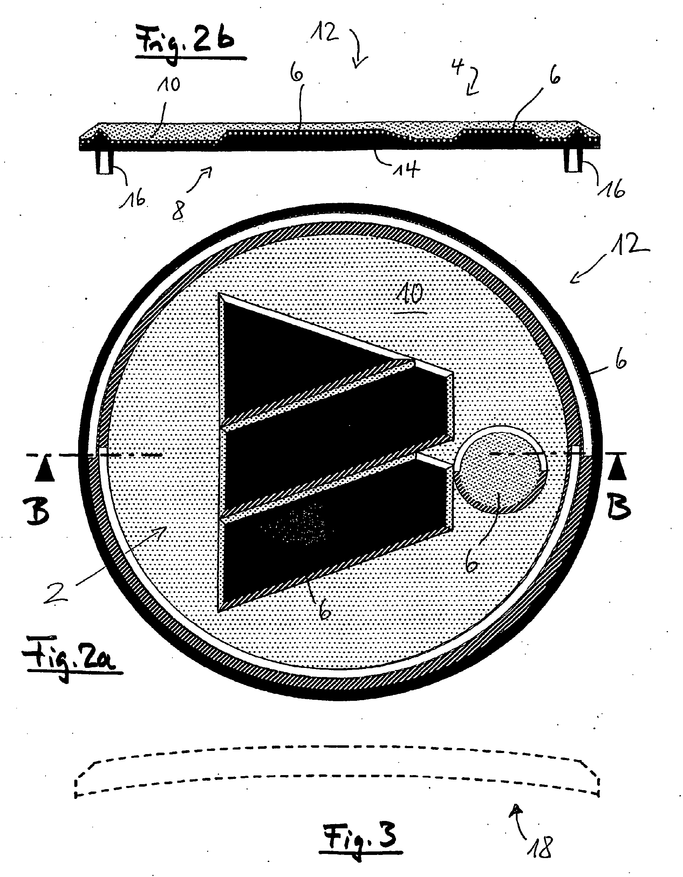

Figur 2a zeigt das durch das anhand der Figur 1 dargestellte Verfahren hergestellte Abdeckelement 12 in Draufsicht. Figur 2b zeigt das Abdeckelement 12 entlang der Schnittlinie B-B aus der Figur 2a, wobei diese Darstellung der Darstellung aus der Figur 1d entspricht.

Diese nun vorliegende Ausführungsform des Abdeckelements 12 weist ein Emblem auf bzw. stellt aufgrund ihrer farblichen Musterung ein solches Emblem dar. Dieses Emblem ist durch die auf der Vorderseite 4 der Folie 2 aufgetragene Farbe 6 optisch hervorgehoben, wobei die Farbe 6 in Figur 2b durch schwarze Bereiche sowie Bereiche dichter Punktung dargestellt ist. Unbedruckte Bereiche der Vorderseite 4 der Folie 2 weisen hier eine Punktung geringer Dichte auf. Die mit der Farbe 6 bedruckten Bereiche der Vorderseite 4 sowie die unbedruckten Bereiche der Vorderseite 4 der Folie 2 sind durch den auf der Vorderseite 4 aufgetragenen transparenten ersten Kunststoff 10 optisch gut erkennbar. Demnach ist die Vorderseite 4 der Folie 2 im vorliegenden Ausführungsbeispiel mit der hier schwarzen Farbe 6 unterschiedlich dicht bedruckt.

Figur 3 zeigt in schematischer Darstellung eine zweite Ausführungsform eines Abdeckelements 18, das in diesem Fall gewölbt ist, aber dieselben hier nicht dargestellten Komponenten wie die in den Figuren 1 und 2 vorgestellte erste Ausführungsform des Abdeckelements 12 aufweist und auf einer Vorderseite ebenfalls ebenmäßig bzw. glatt ausgebildet ist.

## Patentansprüche

1. Abdeckelement für eine Öffnung eines Fahrzeugs, das eine zumindest teilweise metallisierte Folie (2) aufweist, wobei die Folie (2) eine Sandwichstruktur mit einer oberen und einer unteren Deckschicht, insbesondere einer oberen und einer unteren Kunststoffschicht, und einer dazwischen eingebetteten metallischen Schicht aufweist, wobei die Folie (2) durch ihre Sandwichstruktur die metallische Schicht schützt, und wobei die zumindest teilweise metallisierte Folie (2) auf einer Vorderseite (4) mit einer Schicht aus einem ersten Kunststoff (10) überspritzt ist und auf einer Rückseite (8) mit einer Abdeckschicht aus einem zweiten Kunststoff (14) hinterspritzt ist.

2. Abdeckelement nach Anspruch 1, das zum Abdecken einer in der Öffnung anzuordnenden Vorrichtung, die zum Abstandsmessen mittels elektromagnetischer Strahlung ausgebildet ist, vorgesehen ist.

3. Abdeckelement nach Anspruch 1 oder 2, das als Emblem für das Fahrzeug ausgebildet ist.

4. Abdeckelement nach einem der voranstehenden Ansprüche, bei dem mindestens einer der Kunststoffe (10, 14) ein Polycarbonat ist.

5. Abdeckelement nach einem der voranstehenden Ansprüche, bei dem der erste Kunststoff (10) auf der Vorderseite (4) transparent ist.

6. Abdeckelement nach einem der voranstehenden Ansprüche, das als Einsatz in der Öffnung vorgesehen ist.

7. Abdeckelement nach einem der voranstehenden Ansprüche, bei dem die Folie eine Bedruckung aufweist und tiefgezogen ist.

8. Abdeckelement nach Anspruch 1, bei dem mindestens eine Kunststoffschicht der Folie (2) ein Polycarbonat ist.

9. Abdeckelement nach einem der voranstehenden Ansprüche, bei dem die metallische Schicht der Folie (2) eine Dicke von wenigen Mikrometern aufweist.

10. Abdeckelement nach einem der voranstehenden Ansprüche, bei dem in der Abdeckschicht auf der Rückseite (8) der Folie (2) Befestigungselemente (16) integriert sind.

11. Verfahren zum Herstellen eines Abdeckelements für eine Öffnung eines Fahrzeugs, wobei das Abdeckelement eine zumindest teilweise metallisierte Folie (2) aufweist, wobei die Folie (2) eine Sandwichstruktur mit einer oberen und einer unteren Deckschicht, insbesondere einer oberen und einer unteren Kunststoffschicht, und einer dazwischen eingebetteten metallischen Schicht aufweist, wobei die Folie (2) durch ihre Sandwichstruktur die metallische Schicht schützt, bei dem eine Vorderseite (4) der zumindest teilweise metallisierten Folie (2) mit einem ersten Kunststoff (10) unter Verbundbildung überspritzt und eine Rückseite dieser Folie (2) mit einem zweiten Kunststoff (14) unter Verbundbildung hinterspritzt wird.

## Claims

1. Cover element for an aperture of a vehicle having an at least partially metallized film (2), wherein the film (2) has a sandwich structure with an upper and a lower cover layer, in particular an upper and a lower plastic layer, and a metallic layer embedded between those, wherein the film (2) protects the metallic layer by its sandwich structure, and wherein the at least partially metallized film (2) is oversprayed with a layer of a first plastic (10) at a front site (4) and is undersprayed with a covering layer of a second plastic (14) at a back side (8).

2. Cover element according to claim 1 designed to cover a device to be disposed in the aperture, the device being adapted to perform distance measurements by electromagnetic radiation.

3. Cover element according to claim 1 or 2 designed as an emblem for the vehicle.

4. Cover element according to one of the preceding claims, wherein at least one of the plastics (10, 14) is a polycarbonate.

5. Cover element according to one of the preceding claims, wherein the first plastic (10) is transparent at the front side (4).

6. Cover element according to one of the preceding claims designed as an insert in the aperture.

7. Cover element according to one of the preceding claims, wherein the film has a print and is deep-drawn.

8. Cover element according to claim 1, wherein at least one plastic layer of the film (2) is a polycarbonate.

9. Cover element according to one of the preceding claims, wherein the metallic layer of the film (2) has a thickness of a few micrometers.

10. Cover element according to one of the preceding claims, wherein fastening elements (16) are integrated in the cover layer at the back side (8) of the film (2).

11. Method for producing a cover element for an aperture of a vehicle, wherein the cover element has an at least partially metallized film (2), wherein the film (2) has a sandwich structure with an upper and a lower cover layer, in particular an upper and a lower plastic layer, and a metallic layer embedded between those, wherein the film (2) protects the metallic layer by its sandwich structure, wherein a front side (4) of the at least partially metallized film (2) is oversprayed with a first plastic (10) with the formation of a compound, and a back side of this film (2) is undersprayed with a second plastic (14) with the formation of a compound.

12. Method according to claim 11, wherein the film (2), before being oversprayed with the first plastic (10) and before being undersprayed with the second plastic (14), is imprinted with a pattern by deposition of ink (6), and is deformed by a deep-drawing process for providing a three-dimensional structure of the film (2).

13. Method according to one of claims 11 or 12, wherein the film (2) is sprayed by an in-mould film technique.

14. Method according to one of claims 11 to 13, wherein in a further step a hard coating, in particular a hard coating made of siloxane resist, is deposited on the cover element at the side of at least one of the sprayed plastics.

15. Method according to one of claims 11 to 14, wherein fastening elements (16) are integrated in the cover layer for the back side (8) of the film (2).

## Revendications

1. Élément de couverture pour une ouverture d'un véhicule, qui comprend une feuille (2) au moins partiellement métallisée, et une couche de recouvrement inférieure, en particulier une couche en matière plastique supérieure et une couche en matière plastique inférieure, et une couche métallique noyée entre celles-ci, dans lequel la feuille (2) protège grâce à sa structure sandwich la couche métallique, et dans lequel la feuille au moins partiellement métallisée (2) est enrobée sur une face antérieure (4) avec une couche d'une première matière plastique (10) et sur une face postérieure (8) avec une couche de recouvrement en une seconde matière plastique (14).

2. Élément de couverture selon la revendication 1, qui est prévu pour recouvrir un dispositif à agencer dans l'ouverture, le dispositif étant réalisé pour la mesure de distance au moyen d'un rayonnement électromagnétique.

3. Élément de couverture selon la revendication 1 ou 2, qui est réalisé comme emblème pour le véhicule.

4. Élément de couverture selon l'une des revendications précédentes, dans lequel l'une au moins des matières plastiques (10, 14) est un polycarbonate.

5. Élément de couverture selon l'une des revendications précédentes, dans lequel la première matière plastique (10) sur la face antérieure (4) est transparente.

6. Élément de couverture selon l'une des revendications précédentes, qui est prévu comme insert dans l'ouverture.

7. Élément de couverture selon l'une des revendications précédentes, dans lequel la feuille comporte une impression et est emboutie.

8. Élément de couverture selon la revendication 1, dans lequel au moins une couche en matière plastique de la feuille (2) est un polycarbonate.

9. Élément de couverture selon l'une des revendications précédentes, dans laquelle la couche métallique de la feuille (2) présente une épaisseur de quelques micromètres.

10. Élément de couverture selon l'une des revendications précédentes, dans lequel des éléments de fixation (16) sont intégrés dans la couche de recouvrement sur la face postérieure (8) de la feuille (2).

11. Procédé pour la fabrication d'un élément de couverture pour une ouverture d'un véhicule, dans lequel l'élément de couverture comprend une feuille (2) au moins partiellement métallisée, dans lequel la feuille (2) présente une structure sandwich avec une couche de recouvrement supérieure et une couche de recouvrement inférieure, en particulier une couche en matière plastique supérieure et une couche en matière plastique inférieure, et une couche métallique noyée entre celles-ci, dans lequel la feuille (2) protège grâce à sa structure sandwich la couche métallique, procédé dans lequel on enrobe une face antérieure (4) de la feuille au moins partiellement métallisée (2) avec une première matière plastique (10) en formant un composite, et on enrobe une face postérieure de cette feuille (2) avec une seconde matière plastique (14) en formant un composite.

12. Procédé selon la revendication 11, dans lequel la feuille (2) avant l'enrobage avec la première matière plastique (10) sur la face antérieure et avant l'enrobage avec la seconde matière plastique (14) sur la face postérieure est imprimée avec un motif par application de colorant (6) et est déformée par un processus d'emboutissage pour réaliser une structure tridimensionnelle dans la feuille (2).

13. Procédé selon l'une des revendications 11 ou 12, dans lequel la feuille (2) est enrobée avec une technique dite "film en moule".

14. Procédé selon l'une des revendications 11 à 13, dans lequel un revêtement dur est appliqué sur l'élément de couverture, sur les côtés de l'une au moins des matières plastiques enrobées dans une étape ultérieure, ledit revêtement dur étant formé en particulier en laque au siloxane.

15. Procédé selon l'une des revendications 11 à 14, dans lequel des éléments de fixation (16) sont intégrés dans la couche de recouvrement pour la face postérieure (8) de la feuille (2).
